Europäisches Patentamt

European Patent Office

Office européen des brevets

(19)

(11) Veröffentlichungsnummer: **0 060 545**
**B1**

(12) # EUROPÄISCHE PATENTSCHRIFT

(45) Veröffentlichungstag der Patentschrift:
**03.07.85**

(21) Anmeldenummer: **82102079.9**

(22) Anmeldetag: **15.03.82**

(51) Int. Cl.⁴: **B 60 T 8/32**

(54) **Blockierschutzeinrichtung.**

(30) Priorität: **16.03.81 DE 3110103**

(43) Veröffentlichungstag der Anmeldung:
**22.09.82 Patentblatt 82/38**

(45) Bekanntmachung des Hinweises auf die Patenterteilung:
**03.07.85 Patentblatt 85/27**

(84) Benannte Vertragsstaaten:
**DE FR IT NL SE**

(56) Entgegenhaltungen:
**DE - A - 1 480 273**
**DE - B - 1 101 190**
**FR - A - 1 496 174**
**FR - A - 1 536 410**
**FR - A - 2 384 660**
**GB - A - 1 172 008**

(73) Patentinhaber: **Knorr-Bremse GmbH, Moosacher Strasse 80, D-8000 München 40 (DE)**

(72) Erfinder: **Eckhart, Alfred, Friedenheimer Strasse 46/I, D-8000 München21 (DE)**
Erfinder: **Pangerl, Friedrich, Schwarzhölzlstrasse 60, D-8000 München 50 (DE)**

## Beschreibung

Die Erfindung bezieht sich auf eine Blockierschutzeinrichtung für die Radbremsung eines Kraftfahrzeuges mit gemeinsamer Regelung des Bremsdruckes in den Bremszylindern einer Fahrzeugachse und einem in die zu den beiden Bremszylindern führende gemeinsame Bremsleitung eingesetzten 3/2-Wege-Ventil, wobei die Bremsleitung hinter dem 3/2-Wege-Ventil in zwei Bremsleitungszweige gabelt, die jeweils an einen Bremszylinder angeschlossen sind und in jedem Bremsleitungszweig ein 2/2-Wege-Ventil eingesetzt ist und wobei jedes der drei Wege-Ventile von einem separaten Magnetventil vorgesteuert ist, die über je einen vor dem 3/2-Wege-Ventil von der Bremsleitung abzweigenden Bremsleitungszweig an die Bremsleitung angeschlossen sind, wobei jedes 2/2-Wege-Ventil mit einem Steuerraum versehen ist und eine Absperrstellung einnimmt, wenn der Druck im Steuerraum über einen bestimmten Schaltdruck angestiegen ist, und in Durchgangsstellung geschaltet ist, wenn der Druck im Steuerraum unter diesen Schaltdruck gefallen ist, und wobei jedes Magnetventil in einer ersten Stellung den Steuerraum des entsprechenden 2/2-Wege-Ventils entlüftet und in einer zweiten Stellung belüftet.

Eine solche Einrichtung ist durch die DE-A-26 25 502 bekannt. Die vorteilhafte Anordnung der drei Wege-Ventile mit den zugehörigen Magnetventilen nach der bekannten Einrichtung in einem kompakten Schaltventil ist durch die DE-A-28 55 876 bekannt geworden.

Bei der bekannten Blockierschutzeinrichtung bzw. bei dem vorstehend genannten Schaltventil besitzt die an den Magnetventilen liegende Steuerluft zur Vorsteuerung der Wege-Ventile dieselbe absolute Druckhöhe wie die Druckluft, die jeweils vom Motorwagen-Bremsventil in die Bremsleitung eingesteuert ist.

Bei der bekannten Blockierschutzeinrichtung sind die einzelnen Funktionsteile bei normalen Betriebsbedingungen auf ihr Funktionsverhalten optimiert. Ihr Funktionsverhalten ist daher bei extremen Betriebsbedingungen, z.B. bei tiefen Temperaturen und voll eingesteuertem Bremsdruck nicht mehr optimal, so dass ein einwandfreies Funktionsverhalten nicht mehr garantiert und damit vor allem die Betriebssicherheit in Frage gestellt ist.

Aufgabe der Erfindung ist es daher, eine Blockierschutzeinrichtung der eingangs genannten Art anzugeben, mit der die Schaltgeschwindigkeit der 2/2-Wege-Ventile erhöht und damit ein einwandfreies Funktionsverhalten auch unter Extrembedingungen sicher gewährleistet werden kann und dass ausserdem die Dauerstandfestigkeit der Schalt- und Dichtungselemente erhöht wird.

Die Aufgabe wird erfindungsgemäss dadurch gelöst, dass wenigstens die beiden Magnetventile der 2/2-Wege-Ventile über einen gemeinsamen Druckbegrenzer an die Bremsleitung angeschlossen sind.

Durch den Druckbegrenzer wird der in die Bremsleitung eingesteuerte Bremsdruck bei Erreichen einer gewählten Druckhöhe auf einem im wesentlichen konstanten Niveau gehalten.

Vorteilhafte Ausführungen für den in der erfindungsgemässen Blockierschutzeinrichtung verwendeten Druckbegrenzer und seiner Anordung in einem die drei Wege-Ventile und die zugehörigen Magnetventile umfassenden Schaltventil können den Merkmalen der Unteransprüche entnommen werden.

Die Erfindung wird anhand von Ausführungsbeispielen beschrieben, die in einer Zeichnung schematisch dargestellt sind. Zur besseren Verdeutlichung der Erfindung umfasst die Zeichnung auch verschiedene Bremsdruckdiagramme. Im einzelnen zeigt

Figur 1 ein Schema einer ersten erfindungsgemässen Blockierschutzeinrichtung,

Figur 2 ein weiteres Schema einer zweiten erfindungsgemässen Blockierschutzeinrichtung ähnlich der nach Fig. 1,

Figur 3 u. 4 zwei Ausführungsbeispiele für den in Fig. 1 und 2 verwendeten Druckbegrenzer,

Figur 5 ein Bremsdruckdiagramm eines in Fig. 1 und 2 verwendeten Durckbegrenzers, z.B. nach Fig. 3 oder 4,

Figur 6 ein Bremsdruckdiagramm eines Bremszylinders,

Figur 7 Schaltdruckdiagramme eines der beiden 2/2-Wege-Ventile bei einer eingangs bezeichneten bekannten Blockierschutzeinrichtung und bei der erfindungsgemässen Blockierschutzeinrichtung, und

Figur 8 ein die erfindungsgemässe Einrichtung umfassendes Schaltventil.

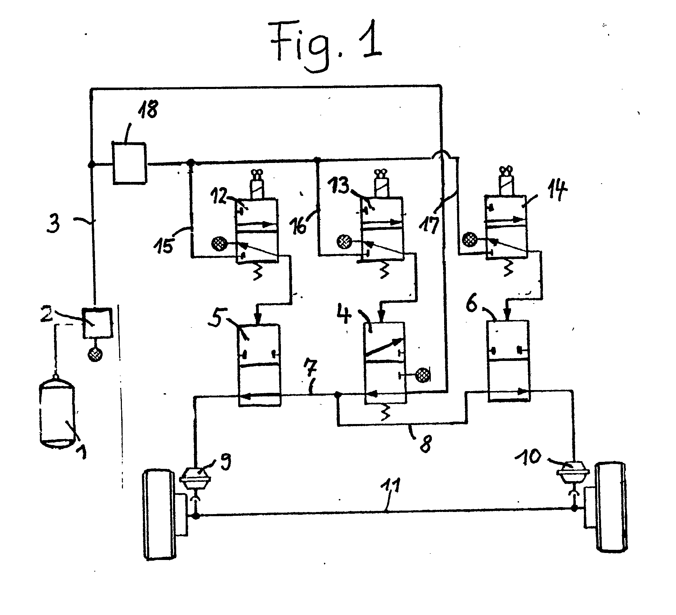

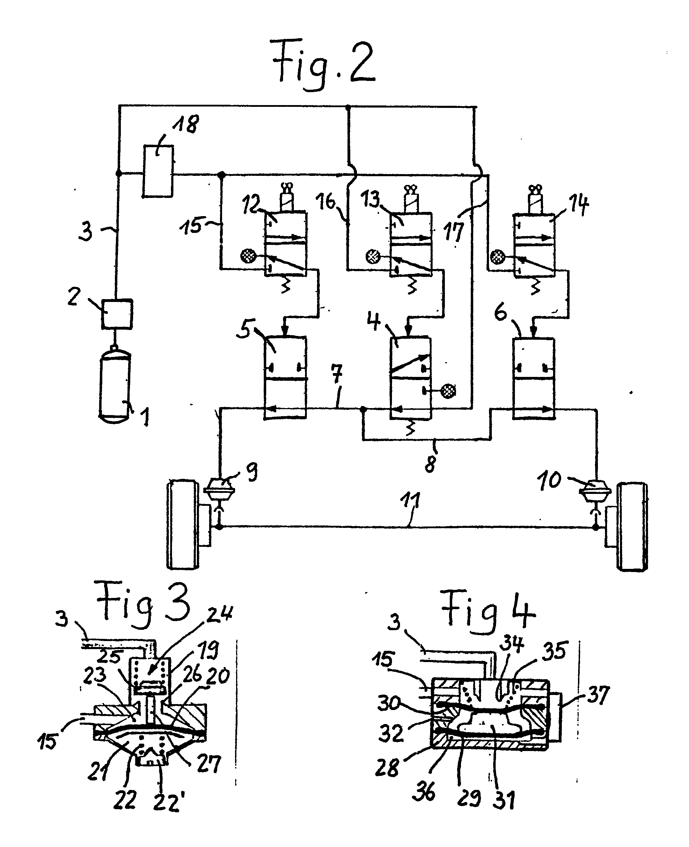

Die Figuren 1 und 2 umfassen jeweils einen Druckluft-Vorratsbehälter 1, ein Motorwagen-Bremsventil 2, eine Bremsleitung 3, ein in die Bremsleitung 3 eingeschaltetes 3/2-Wege-Ventil 4, zwei dem 3/2-Wege-Ventil 4 nachgeordnete 2/2-Wege-Ventile 5 und 6, die in Bremszweigleitungen 7 und 8 zu den beiden Bremszylindern 9 und 10 einer Fahrzeugachse 11 eingesetzt sind.

Jeden der drei Wege-Ventile 4, 5 und 6 ist jeweils ein Vorsteuermagnetventil 12, 13, 14 zugeordnet. Über Bremszweigleitungen 15, 16, 17 sind die Vorsteuermagnetventile 12, 13, 14 an die Bremsleitung 3 angeschlossen. In Fig. 1 sind die Bremszweigleitungen 15, 16 und 17 über einen gemeinsamen Druckbegrenzer 18 an die Bremsleitung 3 angeschlossen.

In Fig. 2 sind nur die Bremszweigleitungen 15 und 17 zu den beiden 2/2-Wege-Ventile 5 und 6 über den Druckbegrenzer 18 an die Bremsleitung 3 angeschlossen.

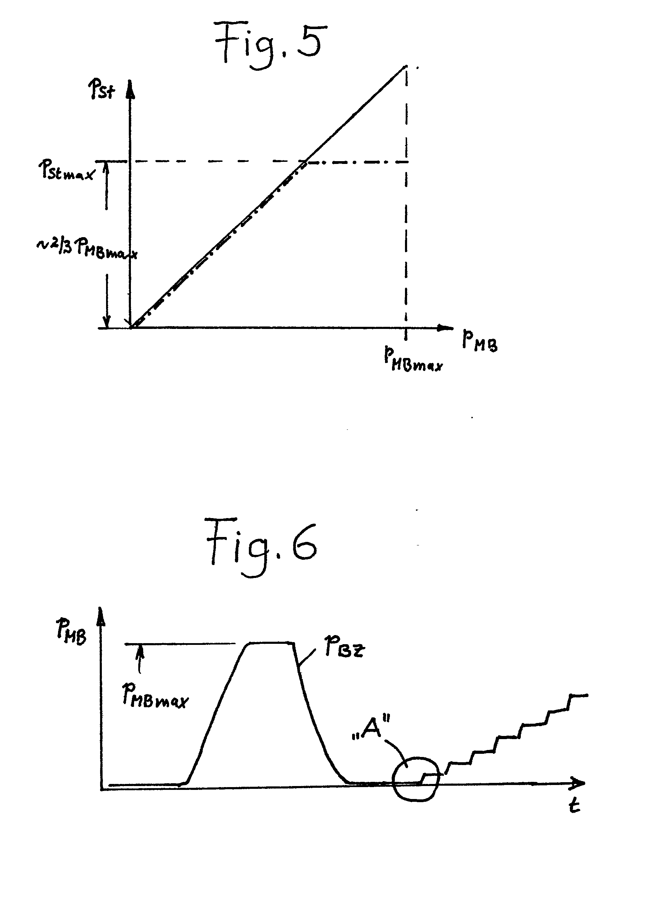

Ausführungsbeispiele für den Druckbegrenzer sind in den Figuren 3 und 4 dargestellt.

Der Druckbegrenzer nach Fig. 3 besteht aus einem Gehäuse 19 mit einer eingespannten Membran 20. Der Raum 21 zur einen Seite der Membran liegt an Atmosphäre und schliesst eine Feder 22 ein, die sich gegen die Membran 20 abstützt. Der Raum 23 zur anderen Seite der Membran 20 ist über ein Ventil 24 an die Bremsleitung 3 angeschlossen. Das Ventil umfasst einen federbelasteten Ventilschliesskörper 25 und einen Ventilsitz 26. Über einen Stössel 27 überwacht die Membran 20 die Öffnungs- bzw. Schliessstellung des Ventils 24. An den Raum 23 ist eine Bremszweigleitung, z.B. die Bremszweigleitung 15 in Fig. 1 und 2, angeschlossen, die über das Magnetventil 12 an den nicht dargestellten Steuerraum des 2/2-Wege-Ventils 5 geführt ist.

Der Druckbegrenzer nach Fig. 4 besteht aus einem Ventilgehäuse 28 mit zwei Membranen 29, 30, die durch einen Abstandskörper 31 auf Abstand voneinander gehalten sind. Der Zwischenraum zwischen den Membranen 29 und 30 ist über eine Gehäusebohrung 32 entlüftet. Die eine Membran 30 begrenzt mit ihrer Aussenseite einen Ventilraum 33, der über einen Ventilsitz 34 an die Bremsleitung 3 angeschlossen ist. Die Membran 30 mit einer relativ kleinen Druckfläche ist von einer Feder 35 in dem Raum 33 in Öffnungsrichtung des Ventils belastet. Die andere Membran 29 begrenzt einen weiteren Ventilraum 36. Beide Ventilräume stehen über einen Gehäusekanal 37 ständig miteinander in Verbindung. Die beaufschlagbare Druckfläche der Membran 29 ist grösser als die Druckfläche der Membran 30. An den Ventilraum 33 ist z.B. die Bremszweigleitung 15 in Fig. 1 und 2 angeschlossen, die über das Magnetventil 12 an den nicht dargestellten Steuerraum des 2/2-Wege-Ventils 5 geführt ist.

In Fig. 5 ist ein beispielsweises Druckluftdiagramm des Druckluftbegrenzers 18 in Fig. 1 und 2, z.B. nach einem der beiden Ausführungsbeispiele in den Figuren 3 oder 4 dargestellt.

Auf der Abszisse sind die vom Motorwagen-Bremsventil in die Bremsleitung 3 vor dem Druckbegrenzer 18 eingesteuerten Drücke $p_{MB}$ aufgetragen. Auf der Ordinate sind dagegen die vom Druckbegrenzer z.B. in die Bremszweigleitung 15 und 17 zu den Magnetventilen 12 und 14 eingesteuerten Drücke $p_{ST}$ aufgetragen.

Mit ansteigendem Druck $p_{MB}$ in der Bremsleitung 3 vor dem Druckbegrenzer 18 steigt in gleicher Weise auch der vom Druckbegrenzer 18 abgegebene Druck $p_{ST}$ an, bis der Druck $p_{STmax}$ erreicht ist. Bei weiterem linearen Anstieg des Druckes $p_{MB}$ bis zum Erreichen des maximalen Bremsleitungsdruckes $p_{MBmax}$ bleibt dagegen der vom Druckbegrenzer abgegebene Druck auf konstanter Höhe. In dem Diagramm ist der Bremsleitungsdruck vor dem Druckbegrenzer als ununterbrochene Linie und der vom Druckbegrenzer abgegebene Druck strichpunktiert dargestellt. Man erkennt, dass im Beispielsfalle der Druck $p_{STmax}$ ungefähr gleich $2/3 p_{MBmax}$ ist.

Dem Fachmann sind die Funktionen der beiden beispielsweisen Druckbegrenzer nach den Figuren 3 und 4 ohne weiteres verständlich.

In Fig. 3 ist die Feder 22 derart über eine von aussen zugängliche Gehäuseeinstellschraube 22' eingestellt, dass bei Erreichen des Druckes $p_{STmax}$ in der Kammer 23 und damit z.B. in der Leitung 15 und 17 das Ventil 24 in Schliessstellung geht, so dass eine weitere Druckerhöhung am Ausgang des Druckbegrenzers unterbunden wird. Die Funktionselemente in dem Druckbegrenzer sind also derart aufeinander abgestimmt, dass auch bei weiter steigendem Druck $p_{MB}$ in der Bremsleitung 3 vor dem Druckbegrenzer nur so viel Luft aus der Bremsleitung 3 über das von der Membran 20 überwachte Ventil 24 in die Bremszweigleitung 15, 17 gelangt, dass der Druck $p_{STmax}$ im wesentlichen auf konstanter Höhe bleibt und nicht weiter ansteigt. Fällt der Druck in der Bremsleitung 3 unter den entsprechenden Wert $p_{STmax}$, dann geht das Ventil 24 wieder in Öffnungsstellung.

Die Arbeitsweise der bekannten Blockierschutzeinrichtung entsprechend den Figuren 1 und 2 jeweils ohne dem Druckbegrenzer 18 ist durch die Offenlegungsschrift DE-A 26 25 502 bekannt und braucht hier nicht wiederholt zu werden. Insbesondere wird auf die Beschreibung der vorstehend genannten Offenlegungsschrift verwiesen.

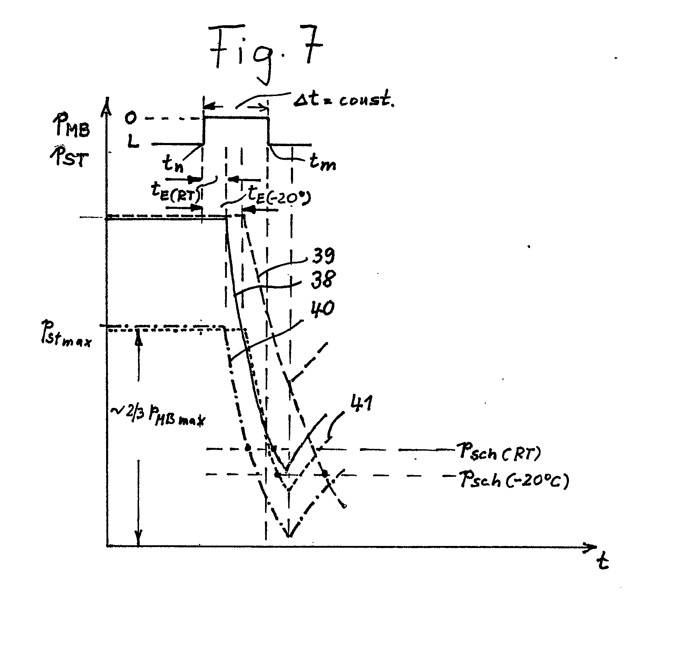

Anhand der Diagramme in den Figuren 6 und 7 der vorliegenden Anmeldung soll jetzt die Wirkungsweise der erfindungsgemässen Blockierschutzeinrichtung beschrieben werden, in der wenigstens den beiden Vorsteuermagnetventilen 12 und 14 der 2/2-Wege-Ventile 5 und 6 der Druckbegrenzer 18 vorgeschaltet ist. Wie Fig. 6 verdeutlicht, wurde der Druck $p_{BZ}$ im Bremszylinder, z.B. in einem der Zylinder 9 oder 10, nach einer Vollbremsung bei maximalem Bremsleitungsdruck $p_{MBmax}$ voll entlüftet, weil das zugehörige Rad zu Blockieren drohte. Der Druckverlauf in Fig. 6 zeigt, dass nach der Entlüftung des Bremszylinders ein gepulster Druckanstieg in dem Zylinder vorgenommen wird, um das zugehörige Rad vorsichtig wieder einzubremsen.

Das Diagramm nach Fig. 6 gilt sowohl für die bekannte Blockierschutzeinrichtung nach der DE-OS 26 25 502 als auch für die erfindungsgemässe Blockierschutzeinrichtung.

Beim gepulsten Wiedereinbremsen des Bremszylinders ist in Fig. 6 ein Detail A durch einen Kreis angezeigt. Der Schaltdruckverlauf des dem betreffenden Bremszylinder zugeordneten 2/2-Wege-Ventils im Bereich des Details A ist in Fig. 7 dargestellt, und zwar ist hier der Schaltdruckverlauf der bekannten Blockierschutzeinrichtung nach der DE-OS 26 25 502 ohne einen Druckbegrenzer dem entsprechenden Schaltdruckverlauf der erfindungsgemässen Blockierschutzeinrichtung mit einem Druckbegrenzer gegenübergestellt.

Auf der Abszisse des Diagrammes ist die Zeit t und auf der Ordinate ist der Druck $p_{MB}$ bzw. $p_{ST}$ aufgetragen, der zum Umschalten der betreffenden 2/2-Wege-Ventile vorhanden ist.

Beim Stand der Technik wird, wie schon erwähnt, bei einer Vollbremsung zum Umschalten der 2/2-Wege-Ventile der volle Bremsleitungsdruck verwendet.

Unter normalen Betriebsbedingungen des Fahrzeuges im Bereich optimaler Funktionsbedingungen der Ventilbauteile, z.B. bei Raumtemperatur, ergibt sich zum Umschalten des betreffenden 2/2-Wege-Ventils beim Stand der Technik im Bereich des Details A in Fig. 6 ein normaler Schaltdruckverlauf, der durch eine durchgehende Linie 38 dargestellt ist.

Unter extremen Betriebsbedingungen, z.B. bei −20 °C, bei denen die Ventile nicht mehr unter optimalen Funktionsbedingungen arbeiten, ergibt sich zum Umschalten des 2/2-Wege-Ventils beim Stand der Technik im Bereich des erwähnten Details A dagegen ein veränderter Schaltdruckverlauf, der durch eine gestrichelte Linie 39 gekennzeichnet ist und der sich von dem Schaltdruckverlauf nach Linie 38 bei normalen Betriebsbedingungen wesentlich unterscheidet, wie in Fig. 7 deutlich zu erkennen ist und wodurch, wie nachstehend noch ausgeführt wird, die Funktionssicherheit der bekannten Blockierschutzeinrichtung gefährdet ist.

Bei der erfindungsgemässen Blockierschutzeinrichtung wird dagegen bei einer Vollbremsung zum Umschalten des 2/2-Wege-Ventils ein reduzierter Bremsleitungsdruck verwendet. Unter normalen Betriebsbedingungen des Fahrzeuges, also z.B. bei Raumtemperatur ergibt sich zum Umschalten des betreffenden 2/2-Wege-Ventils bei der Erfindung im Bereich des Details A ein vom Stand der Technik abweichender normaler Schaltdruckverlauf, der durch eine strickpunktierte Linie 40 in Fig. 7 gekennzeichnet ist.

Schliesslich ergibt sich unter extremen Betriebsbedingungen, z.B. bei −20 °C, bei denen wiederum die Ventile nicht mehr unter optimalen Funktionsbedingungen arbeiten, zum Umschalten des 2/2-Wege-Ventils bei der Erfindung im Bereich des Details A ein abweichender Schaltdruckverlauf, der durch die punktierte Linie 41 gekennzeichnet ist und der sich von dem Schaltdruckverlauf nach der Linie 40 bei normalen Betriebsbedingungen wesentlich unterscheidet, ohne dass dadurch aber die Funktionssicherheit der erfindungsgemässen Blockierschutzeinrichtung gefährdet wird.

Beim Stand der Technik wie bei der Erfindung ist die jeweilige Schaltsituation eines 2/2-Wege-Ventils abhängig davon, ob das zugehörige Vorsteuermagnetventil erregt oder nicht erregt ist. In Fig. 7 ist die Erregung des Vorsteuermagnetventils mit L und die Nichterregung des Vorsteuermagnetventils mit O gekennzeichnet. Die Magnetventile sind beim Stand der Technik wie bei der Erfindung so ausgebildet bzw. derart elektrisch geschaltet, dass sie während des konstanten Zeitabschnittes $\Delta t$ nicht geschaltet sind.

Ist das Magnetventil eines 2/2-Wege-Ventils nicht geschaltet, befindet sich letzteres in der Durchgangsstellung, in der je nach der Stellung des 3/2-Wege-Ventils der betreffende Zylinder be- oder entlüftet wird. Ist das Magnetventil dagegen geschaltet, so ist auch das 2/2-Wege-Ventil in seine Absperrstellung geschaltet, in der der Druck in dem zugehörigen Bremszylinder konstant gehalten wird.

Soll z.B. der Zylinder 10 nach Fig. 1 und 2 wegen Blockiergefahr voll entlüftet werden, so wird das Magnetventil 13 erregt, wodurch der betreffende Schaltdruck zum Umschalten des 3/2-Wege-Ventils 4 in seine Entlüftungsstellung freigegeben wird. In der Entlüftungsstellung des 3/2-Wege-Ventils 4 wird der Zylinder 10 über das nicht umgeschaltete 2/2-Wege-Ventil 6 entlüftet. Zum erneuten Belüften wird das Magnetventil 13 entregt, wodurch das 3/2-Wege-Ventil wieder in seine Ausgangslage geht. In dieser Stellung wird der Zylinder 10 über das 3/2-Wege-Ventil 4 und das 2/2-Wege-Ventil mit Druckluft beaufschlagt.

Um eine gestufte Belüftung zu erhalten, wie sie in Fig. 6 angedeutet ist, muss das Magnetventil 14 in einer gewählten Taktfolge erregt und wieder entregt werden, damit während der erregten Phase des Magnetventiles, in der sich das 2/2-Wege-Ventil 6 in seiner Absperrstellung befindet, der eingespeiste Druck im Zylinder gehalten und anschliessend während der nicht erregten Phase des Magnetventils, in der sich das 2/2-Wege-Ventil 6 in seiner Ausgangsstellung befindet, der Druck im Zylinder 10 wieder erhöht werden kann.

Zum Schalten des 2/2-Wege-Ventils in einer durch das Magnetventil 14 vorgegebenen bestimmten Schaltfolge für ein gestuftes Einbremsen des Zylinders 10 muss der in Fig. 1 und 2 nicht dargestellte Steuerraum des 2/2-Wege-Ventils 6 in einer entsprechenden Zeitfolge be- und entlüftet werden. Eine Entlüftung des Steuerraumes erfolgt bei nicht erregtem Magnetventil. Der Schaltdruckverlauf des 2/2-Wege-Ventils 6 während der nicht erregten Zeitspanne $\Delta t$ des Magnetventils 14 ist in Fig. 7 für den eingangs genannten Stand der Technik und für die Erfindung dargestellt.

Beim Stand der Technik wird der besagte Steuerraum des 2/2-Wege-Ventils mit dem jeweils in die Bremsleitung 3 eingesteuerten Druck, also bei Vollbremsung mit dem maximalen Bremsdruck $p_{MBmax}$ beaufschlagt.

Wird das Magnetventil 13 zum Zeitpunkt $t_n$ entregt, so vergeht unter normalen Betriebsbedingungen, z.B. bei Raumtemperatur (RT), sowohl beim Stand der Technik wie bei der Erfindung eine Verzögerungszeitspanne $t_{E(RT)}$ bis der Entlüftungsvorgang in der Steuerkammer des 2/2-Wege-Ventils einsetzt.

War beim Stand der Technik der Steuerraum mit dem maximalen Bremsdruck beaufschlagt, so erfolgt die Entlüftung des Steuerraumes des 2/2-Wege-Ventils entlang der Kennlinie 38, bis der Druck im Steuerraum auf den Schaltdruck $p_{Sch(RT)}$ abgesenkt ist. Bei diesem Schaltdruck schaltet das 2/2-Wege-Ventil 6 aus seiner den Druck im Zylinder 10 haltenden Absperrstellung in seine Durchgangsstellung, um den Zylinder 10 zu belüften. Dieser Schaltdruck $p_{Sch(RT)}$ wird zu einem Zeitpunkt erreicht, bei dem kurzzeitig vorher das Magnetventil 14 zum Zeitpunkt $t_m$ wieder erregt worden ist. Nach einer erneuten Verzögerungszeitspanne, während der der Druck im Steuerraum über den Schaltdruck hinaus noch weiter entlüftet wird, setzt die erneute Belüftung des Steuerraumes ein, wie der Druckanstieg der Kennlinie 38 verdeutlicht.

Herrschen beim Stand der Technik jedoch nicht normale Betriebsbedingungen, sondern liegen die Aussentemperaturen z.B. bei −20 °C, dann beginnt beim Entregen des Magnetventils 14 zum Zeitpunkt $t_n$ eine vergrösserte Verzögerungszeitspanne $t_{E(-20°C)}$ zu laufen, ehe die Entlüftung der mit maximalem Bremsdruck beaufschlagten Steuerkammer des 2/2-Wege-Ventils beginnt. Die Druckabsenkung in der Steuerkammer des 2/2-Wege-Ventils 6 verläuft beim Stand der Technik dann entlang der gestrichelten Kurve 39.

Wird nach Ablauf der konstanten Zeitspanne $\Delta t$ zum Zeitpunkt $t_m$ das Magnetventil 14 erneut erregt, dann wird der Steuerraum des 2/2-Wege-Ventils nach Ablauf der Verzögerungszeitspanne bereits wieder belüftet, bevor der Steuerraum bis auf den Schaltdruck $p_{Sch(-20°C)}$ entlüftet worden ist. Das bedeutet aber, dass der Steuerraum des 2/2-Wege-Ventils 6 bereits wieder belüftet wird, bevor eine Umschaltung des 2/2-Wege-Ventils erfolgt ist. Unter den angenommenen extremen Bedingungen bleibt beim Stand der Technik also das 2/2-Wege-Ventil in seiner Absperrstellung verharren, in der der Druck im Zylinder nicht erhöht werden kann, obwohl das Magnetventil hierzu über die vorgegebene konstante Zeitspanne $\Delta t$ entregt worden ist.

Um diesen Nachteil des Standes der Technik zu vermeiden, werden bei der Erfindung die Steuerräume insbesondere der 2/2-Wege-Ventile mit einem beispielsweise um etwa $1/3$ verminderten maximalen Bremsdruck beaufschlagt.

Unter normalen Betriebsbedingungen, z.B. bei Raumtemperatur, wird das Magnetventil 14 entsprechend wie beim Stand der Technik zum Zeitpunkt $t_n$ entregt. Nach einer Verzögerungszeitspanne von $t_{E(RT)}$ wird daraufhin die Druckabsenkung in dem Steuerraum des 2/2-Wege-Ventils 6 wirksam, wie die Kennlinie 40 in Fig. 7 verdeutlicht. Der Schaltdruck $p_{Sch(RT)}$, bei dem das 2/2-Wege-Ventil in seine Durchgangsstellung umgeschaltet wird, wird im Beispielsfalle bereits erreicht, bevor das Magnetventil 14 zum Zeitpunkt $t_m$ erregt wird.

Der Steuerraum des 2/2-Wege-Ventils wird daher im Beispielsfalle bis nahezu auf 0 abgesenkt, bis nach dem erneuten Erregen des Magnetventils 14 und Ablauf der Verzögerungszeitspanne der Steuerraum wieder belüftet wird, wie der ansteigende Ast der Kennlinie 40 verdeutlicht.

Herrschen extreme Betriebsbedingungen, z.B. —20 °C, dann verläuft im Erfindungsfalle die Entlüftung der Steuerkammer des 2/2-Wege-Ventils nach der Kennlinie 41. Hierbei wird deutlich, dass erfindungsgemäss sichergestellt ist, dass auch unter diesen extremen Bedingungen der Schaltdruck $p_{Sch(-20°C)}$, bei dem das 2/2-Wege-Ventil in seine Durchgangsstellung umschaltet, damit der Zylinder 10 belüftet werden kann, sicher erreicht wird, ehe nach dem erneuten Erregen des Magnetventils 14 zum Zeitpunkt $t_m$ und Ablauf der Verzögerungszeitspanne die Steuerkammer des 2/2-Wege-Ventils wieder belüftet wird.

Dank der nur mit reduziertem Bremsdruck beaufschlagten 2/2-Wege-Ventile kann also im Gegensatz zum Stand der Technik erfindungsgemäss sichergestellt werden, dass unter allen Umständen und zu jeden Bedingungen die Steuerräume der 2/2-Wege-Ventile innerhalb der durch die Taktzeit der Magnetventile vorgegebenen Zeitspannen bis auf den vorbestimmten Schaltdruck $p_{Sch}$ sicher entlüftet werden. Die 2/2-Wege-Ventile werden also sicher umgeschaltet, bevor sie nach einer erneuten Erregung der Magnetventile wieder in die vorherige Stellung zurückgeschaltet werden.

Nach Fig. 1 werden in Abhängigkeit von der Schaltstellung der Magnetventile 12, 13 und 14 die Steuerräume der beiden 2/2-Wege-Ventile 5 und 6 und der Steuerraum des 3/2-Wege-Ventils 4 mit einem durch den Druckbegrenzer 18 bestimmten reduzierten Bremsdruck beaufschlagt.

Eine Schaltung nach Fig. 1 kann konstruktionsmässig Vorteile mit sich bringen, wenn die drei Wege-Ventile 4, 5 und 6 und die zugehörigen Magnetventile 12, 13 und 14 mit dem Druckbegrenzer 18 in einem Gehäuse vereint sind. Aus den vorstehenden Erläuterungen der Erfindung ist aber dem Fachmann klar, dass die Steuerkammer des 3/2-Wege-Ventils zum Umschalten des Ventils nicht notwendigerweise mit einem reduzierten Druck beaufschlagt werden muss, um die Funktionssicherheit auch unter extremen Bedingungen sicherstellen zu können. Das liegt vor allem auch daran, dass das 3/2-Wege-Ventil während einer gepulsten Wiederbelüftung eines zuvor wegen Blockiergefahr entlüfteten Zylinders nicht umgeschaltet wird.

Es kann vielmehr von Vorteil sein, gemäss dem Schaltschema nach Fig. 2 nur die Steuerkammer der beiden 2/2-Wege-Ventile mit einem durch den Druckbegrenzer 18 reduzierten Bremsdruck zu beaufschlagen, während der Steuerraum des 3/2-Wege-Ventils mit dem unreduzierten, gegebenenfalls also auch mit dem maximalen Bremsdruck beaufschlagt wird.

Wie eingangs schon erwähnt, ist die spezielle bauliche Anordnung der drei Wege-Ventile 4, 5 und 6 mit den zugehörigen Magnetventilen 12, 13, 14 ohne den erfindungsgemäss vorgeschlagenen Druckbegrenzer in einem kompakten Schaltventil durch die DE-OS 28 55 876 bekannt geworden. Es ist nun besonders vorteilhaft, den Druckbegrenzer 18 z.B. in der Ausführung nach Fig. 4 mit in das bekannte Schaltventil zu integrieren. So besteht das bekannte Schaltventil aus einem Oberteil, das die drei Wege-Ventile beinhaltet, einer Zwischenplatte, die die Ventilsitze für die drei Magnetventile und die Kanäle zum Anschluss der Magnetventilsitze an die Bremsleitungen sowie zum Anschluss der die Magnetventilsitze umgebenden Räume an die 2/2-Wege-Ventile enthält.

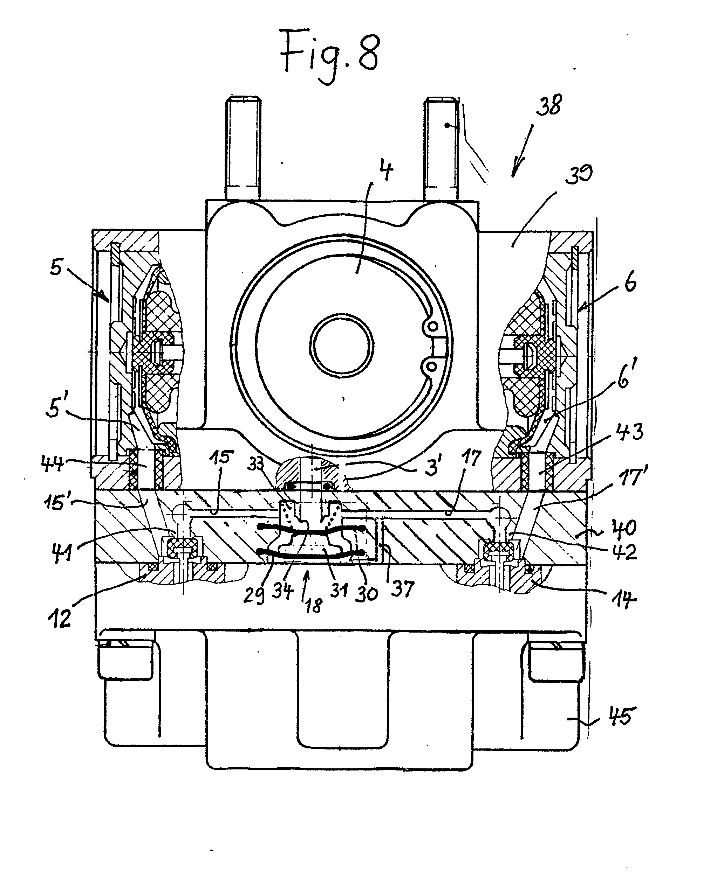

In Fig. 8 ist ein teilweise geschnittenes Ausführungsbeispiel für ein solches Schaltventil 38 dargestellt. Entsprechende Teile der Fig. 1 bzw. 2 und 4 sind mit den gleichen Bezugszeichen versehen.

Das Schaltventil 38 nach Fig. 8 besteht aus einem Gehäuseoberteil 39, das das 3/2-Wege-Ventil 4 und die beiden 2/2-Wege-Ventile 5 und 6 enthält. Die beiden 2/2-Wege-Ventile liegen spiegelbildlich zu einer Mittelachse in einer Ebene, während das 3/2-Wege-Ventil 4 zwischen den beiden 2/2-Wege-Ventilen und senkrecht zu diesen angeordnet ist. Das Schaltventil 38 enthält weiterhin eine Zwischenplatte 40, die die Ventilsitze für die Magnetventile 12, 13 und 14 aufweist. In Fig. 8 sind lediglich die Ventilsitze 41 und 42 der beiden Magnetventilsitze 12 und 14 gezeigt. Ausser den Ventilsitzen für die Magnetventile 12, 13 und 14 enthält die Zwischenplatte 40 den Druckbegrenzer 18 in der beispielsweisen Ausführung nach Fig. 4, die von dem Druckbegrenzer zu den Magnetventilsitzen 41 und 42 führenden Kanäle 15 und 17 und die Anschlusskanäle 15' und 17' zwischen den die Magnetventilsitze umgebenden Räumen und den Anschlussbohrungen 43 und 44 in dem Gehäuseoberteil 39. Diese Anschlussbohrungen 43 und 44 führen zu den Steuerkammern 5' und 6' der beiden 2/2-Wege-Ventile 5 und 6. Der Ventilsitz 34 des Druckbegrenzers 18 schliesst an eine Bohrung 3' im Gehäuseoberteil 39 an, die mit der Bremsleitung 3 in Verbindung steht. Von der Bohrung 3' zweigt im Gehäuseoberteil 39 ausserdem ein nicht gezeichneter Kanal zu dem Steuerraum des 3/2-Wege-Ventils 4 ab.

Damit ist bei dem Schaltventil nach Fig. 8 der Steuerraum des 3/2-Wege-Ventils entsprechend dem Schaltschema nach Fig. 2 über das Magnetventil 13 direkt an die Bremsleitung 3 angeschlossen, während die beiden Steuerräume 5' und 6' der beiden 2/2-Wege-Ventile über die Magnetventile 12 und 14 und den zwischengeschalteten Druckbegrenzer 18 an die Bremsleitung 3 angeschlossen sind.

Es ist dem Fachmann ohne weiteres klar, dass in die Zwischenplatte 40 auch anders ausgebildete Druckbegrenzer, z.B. auch der Druckbegrenzer nach Fig. 3, eingesetzt sein können. Letzterer ist insoweit vorteilhaft, weil er über eine Schraube 22' von aussen leicht einstellbar ist.

Das Schaltventil 38 besitzt schliesslich noch ein Gehäuseunterteil bzw. Gehäusedeckelteil 45, das die drei Magnetventile 12, 13 und 14 trägt, von denen nur die beiden Magnetventile 12 und 14 gezeigt sind.

Ein beachtlicher Vorteil der Erfindung besteht ausser der erhöhten Funktionssicherheit und der verlängerten Dauerstandfestigkeit der Schalt- und Dichtelemente auch in der erhöhten Schaltgeschwindigkeit, bedingt durch die verringerte Druckhöhe zum Umschalten der 2/2-Wege-Ventile und der damit verkürzten Entlüftungszeiten der Drücke in den Steuerräumen der 2/2-Wege-Ventile bis zu ihren Schaltdrücken $p_{ST(RT)}$ bzw. $p_{ST(-20°C)}$.

## Patentansprüche

1. Blockierschutzeinrichtung für die Radbremsung eines Kraftfahrzeuges mit gemeinsamer Regelung des Bremsdruckes in den Bremszylinder (9, 10) einer Fahrzeugachse und einem in die zu den beiden Bremszylindern (9, 10) führende gemeinsame Bremsleitung (3) eingesetzten 3/2-Wege-Ventil (4), wobei die Bremsleitung (3) hinter dem 3/2-Wege-Ventil (4) in zwei Bremsleitungszweige (7, 8) gabelt, die jeweils an einen Bremszylinder (9 bzw. 10) angeschlossen sind und in jedem Bremsleitungszweig (7 bzw. 8) ein 2/2-Wege-Ventil (5; 6) eingesetzt ist, und wobei jedes der drei Wege-Ventile (4, 5, 6) von einem separaten Magnetventil (12; 13; 14) vorgesteuert ist, die über je einen vor dem 3/2-Wege-Ventil (4) von der Bremsleitung (3) abzweigenden Bremsleitungszweig (15, 16, 17) an die Bremsleitung (3) angeschlossen sind, wobei jedes 2/2-Wege-Ventil (5; 6) mit einem Steuerraum versehen ist und eine Absperrstellung einnimmt, wenn der Druck im Steuerraum über einen bestimmten Schaltdruck angestiegen ist, und in Durchgangsstellung geschaltet ist, wenn der Druck im Steuerraum unter diesen Schaltdruck gefallen ist, und wobei jedes Magnetventil (12; 14) in einer ersten Stellung den Steuerraum des entsprechenden 2/2-Wege-Ventils (5; 6) entlüftet und in einer zweiten Stellung belüftet, dadurch gekennzeichnet, dass wenigstens die beiden Magnetventile (12; 14) der 2/2-Wege-Ventile (5; 6) über einen gemeinsamen Druckbegrenzer (18) an die Bremsleitung (3) angeschlossen sind.

2. Blockierschutzeinrichtung nach Anspruch 1, dadurch gekennzeichnet, dass der Druckbegrenzer (18), den in die Bremsleitung (3) eingesteuerten Bremsdruck ($p_{MB}$) bei Erreichen einer gewählten Druckhöhe auf im wesentlichen konstantem Druckniveau ($p_{STmax}$) hält.

3. Blockierschutzeinrichtung nach Anspruch 2, dadurch gekennzeichnet, dass das konstante Druckniveau ($p_{STmax}$) bei circa 2/3 des über das Motorwagenbremsventil (2) in die Bremsleitung (3) eingesteuerten, maximalen Bremsdruckes ($p_{MBmax}$) liegt.

4. Blockierschutzeinrichtung nach den Ansprüchen 1 bis 3, dadurch gekennzeichnet, dass der Druckbegrenzer (18) ein Membranventil ist, dessen Membran (20) auf der einen Seite vom Bremsdruck beaufschlagt und auf der anderen mit der Atmosphäre in Verbindung stehenden Seite von einer Feder (22) mit einstellbarer Federkraft belastet ist, und dass die Membran (20) ein in die Bremsleitung (3) eingeschaltetes Ventil (24) überwacht (Fig. 3).

5. Blockierschutzeinrichtung nach den Ansprüchen 1 bis 3, dadurch gekennzeichnet, dass der Druckbegrenzer (18) aus einem Doppelmembranventil besteht, wobei die Membranen (29, 30) durch ein Abstandsteil (31) auf Abstand voneinander gehalten und der Raum zwischen den Membranen (32) entlüftet ist, dass die aussenliegende Seite der einen Membran (30) mit einer relativ kleinen freien Druckfläche vom Bremsdruck beaufschlagt ist und einen in die Bremsleitung (3) eingeschalteten Ventilsitz (34) überwacht und dass die aussenliegende Seite der anderen Membran (29) mit einer grösseren freien Druckfläche vom Bremsdruck in dem den Ventilsitz (34) umgebenden Ventilraum (33) des Druckbegrenzers beaufschlagt ist (Fig. 4, 8).

6. Blockierschutzeinrichtung nach einem oder mehreren der vorstehenden Ansprüche, wobei das 3/2-Wege-Ventil (4) als Einfachmembrankörper und die beiden 2/2-Wege-Ventile (5, 6) als Doppelmembrankörper im Oberteil (39) eines Schaltventilgehäuses, die Ventilsitze (41, 42) für die Magnetventile (12, 14) und die pneumatischen Anschlusskanäle (15, 17, 15', 17') und -bohrungen zwischen den Magnetventilen (12, 14) zu den drei Wege-Ventilen (5, 6) und zur Bremsleitung (3, 3') in einer Zwischenplatte (40) und die Magnetventile (12, 14) in einem Unter- bzw. Deckelteil (45) angeordnet sind, dadurch gekennzeichnet, dass der Druckbegrenzer (18) in der Zwischenplatte (40) angeordnet ist (Fig. 8).

## Revendications

1. Dispositif anti-blocage pour le freinage des roues d'un véhicule automobile avec un réglage commun de la pression de freinage dans les cylindres de frein (9, 10) d'un essieu de véhicule et une vanne à 3/2 voies (4) montée dans la conduite de frein commune (3) menant aux deux cylindres de frein (9, 10), du type dans lequel la conduite de frein (3) se subdivise derrière la vanne à 3/2 voies en deux branches de conduite de frein (7, 8) dont chacune est reliée à un cylindre de frein (9 ou 10) et une vanne à 2/2 voies (5; 6) étant montée dans chaque branche de conduite de frein (7 ou 8), dans lequel chacune des vannes à trois voies (4, 5, 6) est précommandée par une électrovanne séparée (12; 13; 14) dont chacune est reliée à la conduite de frein (3) par une branche de conduite de frein (15, 16, 17) dérivée, avant la vanne à 3/2 voies (4), de la conduite de frein (3), dans lequel chaque vanne à 2/2 voies (5; 6) est pourvue d'une chambre de commande et assume une position de fermeture lorsque la pression qui règne dans la chambre de commande a augmenté au-delà d'une pression de commutation prédéterminée, et est commutée dans sa position de passage lorsque la pression dans la chambre de commande a chuté en-dessous de cette pression de commutation, et dans lequel chaque électrovanne (12; 14) relie à l'atmosphère, dans une première position, la chambre de commande de la vanne correspondante à 2/2 voies (5; 6), et alimente cette chambre dans une seconde position, caractérisé par le fait qu'au moins les deux électrovannes (12; 14) des vannes à 2/2 voies (5; 6) sont reliées par l'intermédiaire d'un limiteur de pression de commande (18) à la conduite de frein (3).

2. Dispositif anti-blocage selon la revendication 1, caractérisé par le fait que le limiteur de pression (18) maintient à un niveau de pression sensiblement constant la pression de freinage ($p_{MB}$) réglée dans la conduite de frein (3), lorsqu'un niveau de pression choisi est atteint.

3. Dispositif anti-blocage selon la revendication 2, caractérisé par le fait que le niveau de pression constante ($p_{STmax}$) se situe à peu près aux 2/3 de la pression de freinage maximale ($p_{MBmax}$) qui a été réglée dans la conduite de frein (3) par l'intermédiaire de la vanne de commande de frein du véhicule (2).

4. Dispositif anti-blocage selon les revendications 1 à 3, caractérisé par le fait que le limiteur de pression (18) est une soupape à membrane, dont la membrane (20) est chargée, sur un côté, par la pression de freinage et, sur l'autre côté qui est en liaison avec l'atmosphère, par un ressort (22) à force réglable, et que la membrane (20) contrôle une soupape (24) montée dans la conduite de frein (3) (figure 3).

5. Dispositif anti-blocage selon les revendications 1 à 3, caractérisé par le fait que le limiteur de pression (18) est constitué par une soupape à double membrane, les membranes (29, 30) étant maintenues à distance l'une de l'autre par un élément d'entretoise (31) et l'espace entre les membranes étant désaéré (32), que le côté extérieur de l'une (30) des membranes est chargé par la pression de freinage avec une surface de pression libre relativement faible, et contrôle un siège de soupape (34) monté dans la conduite de frein (3), et que le côté extérieur de l'autre (29) des membranes est chargé, avec une plus grande surface de pression libre, par la pression de freinage qui règne dans la chambre de soupape (33) du limiteur de pression, qui entoure le siège de soupape (34) (figures 4, 8).

6. Dispositif anti-blocage selon l'une ou plusieurs des revendications précédentes, du type dans lequel la vanne à 3/2 voies (4) est disposée, sous la forme d'un corps à membrane simple et les deux vannes à 2/2 voies (5, 6) sont disposées sous la forme de doubles membranes, dans la partie supérieure (39) d'un boîtier de soupape de commutation, alors que les sièges de soupape (41, 42) pour les électrovannes (12, 14) et les canaux de liaison pneumatiques (15, 17, 15', 17') et les perçages de liaison entre les électrovannes (12, 14), menant aux vannes à trois voies (5, 6) et à la conduite de frein (3, 3'), dans une plaque intermédiaire (40) et que les électrovannes (12, 14) sont disposées dans une partie inférieure ou une partie de couvercle (45), caractérisé par le fait que le limiteur de pression (18) est disposé dans la plaque intermédiaire (40) (figure 8).

## Claims:

1. Anti-lock device for the wheel brakes of a motor vehicle, comprising common regulation of the brake pressure in the brake cylinders (9, 10) of a vehicle axle and a 3/2-way valve (4) installed in the common brake pipe (3) leading to both brake cylinders (9, 10), the brake pipe (3) bifurcating beyond the 3/2-way valve (4) into two brake pipe branches (7, 8) each of which is connected to a brake cylinder (9 and 10, respectively), and each brake pipe branch (7 and 8) having a 2/2-way valve (5, 6) and each of the three directional control valves (4, 5, 6) being precontrolled by separate solenoid valves (12, 13, 14) which are connected to the brake pipe (3) via one brake pipe branch each (15, 16, 17) branching off from the brake pipe (3) upstream of the 3/2-way valve (4), each 2/2-way valve (5, 6) having a control chamber and assuming a shutoff position when the pressure in the control chamber rises above a certain operating level, and being at the through position when the pressure in the control chamber falls below that operating level, and each solenoid valve (12, 14) serving at one position to exhaust the control chamber of the corresponding 2/2-way valve (5, 6) and to charge it at the other position, wherein at least the two solenoid valves (12, 14) of the 2/2-way valves (5, 6) are connected to the brake pipe (3) via a common pressure limiter (18).

2. Anti-lock device as defined in Claim 1, wherein the brake pressure ($p_{MB}$) admitted to the brake pipe (3) is kept at a substantially constant level ($p_{STmax.}$) when a certain pressure value is reached.

3. Anti-lock device as defined in Claim 2, wherein the constant pressure level ($p_{STmax.}$) is about 2/3 of the maximum brake pressure ($p_{MBmax.}$) admitted to the brake pipe (3) through the tractor unit brake valve (2).

4. Anti-lock device as defined in Claims 1 to 3, wherein the pressure limiter (18) is a diaphragm valve whose diaphragm (20) is loaded by the brake pressure at one side and by a spring (22) of adjustable spring force at the other side which communicates with atmosphere, and wherein the diaphragm (20) monitors a valve (24) inserted in the brake pipe (3) (Fig. 3).

5. Anti-lock device as defined in Claims 1 to 3, wherein the pressure limiter (18) consists of a double diaphragm valve, the diaphragms (29, 30) being held apart by a spacer (31) and the space between the diaphragms being exhausted (32), wherein the exterior side of the one diaphragm (30) is loaded by the brake pressure in a relatively small, free pressure area and monitors a valve seat (34) installed in the brake pipe (3), and wherein the exterior side of the other diaphragm (29) is loaded in a larger, free pressure area by the brake pressure in the pressure limiter chamber (33) enclosing the valve seat (34) (Fig. 4, 8).

6. Anti-lock device as defined in one or more of the preceding Claims the 3/2-way valve (4) being arranged as a single diaphragm body and the two 2/2-way valves (5, 6) as double diaphragm bodies in the upper part (39) of a control valve body, the valve seats (41, 42) for the solenoid valves (12, 14) and the air connecting passages (15, 17, 15', 17') and bores between the solenoid valves (12, 14) to the three directional control valves (5, 6) and to the brake pipe (3, 3') being positioned in an intermediate plate (40) and the solenoid valves (12, 14) being located in a bottom or cover part (45), wherein the pressure limiter (18) is arranged in the intermediate plate (40) (Fig. 8).

Fig. 1

# Fig. 2

# Fig 3

# Fig 4

# Fig. 5

# Fig. 6

Fig. 7

# Fig. 8